Europäisches Patentamt

European Patent Office

Office européen des brevets

(11) Veröffentlichungsnummer: **0 444 275 A1**

## (12) EUROPÄISCHE PATENTANMELDUNG

(21) Anmeldenummer: 90124290.9

(22) Anmeldetag: 15.12.90

(51) Int. Cl.5: **C08L 21/00**, C08G 61/02,
B60C 15/00, //(C08L21/00,
65:00)

(30) Priorität: 27.02.90 DE 4006131

(43) Veröffentlichungstag der Anmeldung:
04.09.91 Patentblatt 91/36

(84) Benannte Vertragsstaaten:
DE FR GB

(71) Anmelder: BAYER AG

W-5090 Leverkusen 1 Bayerwerk(DE)

(72) Erfinder: Abele, Manfred
Am Boerschsgarten 16
W-5000 Köln 90(DE)
Erfinder: Buysch, Hans-Josef, Dr.
Brandenburger Strasse 28
W-4150 Krefeld(DE)
Erfinder: Schrage, Heinrich, Dr.
Doerperhofstrasse 31
W-4150 Krefeld 1(DE)
Erfinder: Vernaleken, Hugo, Dr.
Kreuzbergstrasse 147
W-4150 Krefeld(DE)

(54) Verwendung bestimmter Phenolharze zur Verstärkung von Kautschukvulkanisaten.

(57) Phenolharze, die durch Friedel-Crafts-Alkylierung von Phenolen mit polyfunktionellen Verbindungen erhältlich sind, eignen sich hervorragend als Verstärkerharz für Kautschukvulkanisate.

Die Erfindung betrifft die Verwendung von fremdhärtbaren Novolak-artigen Phenolharzen zur Verstärkung von Kautschukvulkanisaten, wobei anzunehmen ist, daß dann, wenn Phenolharz und Kautschuk gemischt, das Phenolharz gehärtet und der Kautschuk vulkanisiert werden, vernetzte Systeme im Sinne sogenannter Interpenetrating Networks entstehen.

Novolake sind bekanntlich schmelzbare, in einer Reihe organischer Lösungsmittel lösliche, nichtselbsthärtende Polyphenole, deren aromatische Kerne durch Alkylidengruppen verknüpft sind Sie können aus Phenolen und Ketoverbindungen in Gegenwart saurer Katalysatoren hergestellt werden, wobei man üblicherweise ein Molverhältnis Ketoverbindung/Phenol von maximal 1, vorzugsweise von maximal 0,75, einhält; vgl. "Methoden der Organischen Chemie" (Houben-Weyl), Bd. 14/2, Georg Thieme Verlag, Stuttgart 1963, S. 193 ff.

Im Gegensatz zu den selbsthärtenden Resolen sind Novolake und auch die erfindungsgemäß zu verwendenden "Novolak-artigen Phenolharze" im wesentlichen frei von zur Selbstvernetzung befähigten Gruppen - hauptsächlich also frei von Hydroxymethylgruppen.

Unter "Novolaken" im engeren Sinne werden Phenol/Formaldehyd-Kondensate verstanden, während "Novolake" im weiteren Sinne auch Phenolkondensate anderer Ketoverbindungen (z.B. Acetaldehyd, Butyraldehyd, Aceton, Methylethylketon) umfassen, wobei aufgrund von bei der Synthese eindeutig verlaufenden Alkylierungen die Phenolringe dann ausschließlich über substituierte Methylengruppen verknüpft sind.

Im Gegensatz dazu betrifft die vorliegende Erfindung die Verwendung Novolak-artiger Phenolharze, deren Brückenglieder (in kürzester Entfernung zwischen zwei Phenolringen gemessen) überwiegend (d.h. zu mehr als 50, vorzugsweise mehr als 80 Mol-%) 2 bis 8 C-Atome, die gegebenenfalls substituiert sein können, enthalten.

Überraschenderweise wurde nämlich gefunden, daß sich solche Novolak-artigen Phenolharze hervorragend als Verstärkerharze für Kautschukvulkanisate eignen, wobei z.B. bei der Reifenherstellung solche Teile, die hohe Festigkeit mit mäßiger Elastizität in sich vereinen sollen, wie z.B. der Reifenfuß (Reifenwulst), aus derartigen Kautschukvulkanisaten besonders günstige Eigenschaften besitzen. Insbesondere eignen sich die erfindungsgemäß zu verwendenden Phenolharze als Kernfüller (Apex).

Gegenstand der Erfindung ist also die Verwendung von Phenolharzen, erhältlich durch Friedel-Crafts-Alkylierung von A) mindestens einem Phenol mit B) mindestens einer Verbindung mit 4 bis 8 C-Atomen und 2 bis 4, vorzugsweise 3 oder 4, funktionellen Gruppen aus der Reihe Chloratome und $C=C$-Doppelbindungen als Verstärkerharz für Kautschukvulkanisate.

Bevorzugte Phenole A umfassen ein- und zweiwertige einkernige Phenole, die neben den phenolischen Hydroxylgruppen keine anderen Substituenten aufweisen, wie unsubstituiertes Phenol selbst, Brenzcatechin, Resorcin, Hydrochinon; einwertige $C_1$-$C_6$-Alkylphenole wie Kresole, Xylenole, Ethylphenole, Hexylphenole; einwertige Phenylphenole wie Hydroxybiphenyle; ein- und zweikerige $C_6$-$C_{18}$-Bisphenole wie Dihydroxybiphenyle, Bis-(4-hydroxyphenyl)-methan, 2,2-Bis-(4-hydroxyphenyl)-propan und Bis- (4-hydroxyphenyl)-sulfid.

Im Verlauf der Chloroprenherstellung durch Chlorierung von Butadien entstehen neben Chloropren unerwünschte Nebenprodukte mit 4 bis 8, vorzugsweise 4 oder 8, C-Atomen und mindestens 3, vorzugsweise mindestens 4 funktionellen Gruppen aus der Reihe bestehend aus Chloratomen und $C=C$-Doppelbindungen. Typische Nebenprodukte bestehen aus Mischungen aus 20 bis 60 Gew.-% 1,2,3,4-Tetrachlorbutan, 10 bis 60 Gew.-% Dichloroctadienen, 3 bis 20 Gew.-% Trichlorbutenen, 2 bis 8 Gew.-% Tetrachloroctenen und bis zu 15 Gew.-% Dichlorbutenen, Dichlorbutanen und Hexachloroctanen. Der Chlorgehalt solcher Gemische beträgt in der Regel 40 bis 70, vorzugsweise 45 bis 60, Gew.-% bezogen auf Gemisch. Diese beschriebenen Nebenproduktgemische eignen sich hervorragend als Verbindungen B im Sinne dieser Erfindung. Selbstverständlich sind auch die Einzelkomponenten - unabhängig von ihrer Herkunft - sowie Mischungen dieser Komponenten als auch durch Destillation angereicherte Nebenproduktgemische für diesen Zweck geeignet. Tetrachlorbutane ergeben Phenolharze mit hervorragenden, Dichloroctadiene ergeben Phenolharze mit ausgezeichneten Eigenschaften, gemessen als verstärkende Wirkung in Vulkanisaten.

Für die Herstellung der erfindungsgemäß zu verwendenden Phenolharze werden die Ausgangsprodukte in der Regel entsprechend einem Äquivalentverhältnis von phenolischem OH der Phenole A zu funktionellen Gruppen der Verbindungen B (Chlor bzw. $C=C$-Doppelbindung) von 1:10 bis 10:1, vorzugsweise 1:4 bis 8:1, insbesondere 1:2 bis 5:1, eingesetzt.

Für die Herstellung der erfindungsgemäß zu verwendenden Phenolharze geeignete Katalysatoren umfassen alle chemischen Stoffe, die Friedel-Crafts-Alkylierungen beschleunigen, also Protonsäuren und Lewis-Säuren, wie z.B. Schwefelsäure, Chlorwasserstoff, Phosphorsäure, Aluminiumchlorid, metallische Eisen sowie Verbindungen des Eisens, vorzugsweise des 2- und 3-wertigen Eisens, wie z.B. die Bromide, die Nitrate, die Sulfate, die Oxalate, insbesondere die Chloride, Zinnchlorid, Bortrifluorid, Titantetrachlorid, Zinkchlorid und Zinksulfat. Zinksalze werden bevorzugt; Zinksulfat wird besonders bevorzugt. Die Reaktion kann auch ohne Katalysatorzusatz durchgeführt werden, weil der während der Reaktion entstehende Chlorwasserstoff ebenfalls katalytisch wirkt.

Übliche Katalysatormengen liegen bei Salzen im allgemeinen bei 0,05 bis 10, vorzugsweise 0,1 bis 3, Gew.-%, bei Säuren im allgemeinen bei 0,05 bis 10, vorzugsweise 0,1 bis 5 Gew.-%, jeweils bezogen auf Verbindungen B.

Vorzugsweise wird das Verfahren zur Herstellung der erfindungsgemäß zu verwendenden Phenolharze in Abwesenheit von Lösungsmitteln durchgeführt. Es ist jedoch ohne weiteres möglich, unter Reaktionsbedingungen inerte organische Lösungsmittel, vorzugsweise solche mit einem Siedepunkt über 120, insbesondere über 180 °C, wie Nitrobenzol, Dichlorbenzole, Benzonitril, Chlornaphthaline mitzuverwenden. Falls man das Verfahren in Lösung durch führen möchte, wird man das organische Lösungsmittel in Mengen von 5 bis 100 Gew.-%, bezogen auf die Summe von Phenole A und Verbindungen B, einsetzen.

Das Verfahren ist exotherm und kann deshalb, sobald es in Gang gekommen ist, ohne Wärmezufuhr von außen ablaufen. Um einen möglichst vollständigen Reaktionsablauf und damit einen möglichst geringen Chlorgehalt des Endprodukts zu erreichen, kann es sinnvoll sein, das Reaktionsgemisch nach Beendigung der Zugabe der Komponenten noch 2 bis 20 Stunden bei Temperaturen von 40 bis 280, vorzugsweise 80 bis 250, insbesondere 120 bis 200 °C zu belassen; das Ende der Reaktion läßt sich an der Beendigung der Chlorwasserstoffentwicklung ablesen.

Praktisch läßt sich das Verfahren beispielsweise so durchführen, daß man das geschmolzene Phenol A und den Katalysator vorlegt und das Gemisch B, gegebenenfalls gelöst in organischem Lösungsmittel, zudosiert. Um eine gute Durchmischung der Komponenten zu erreichen, kann man rühren. Nach beendeter Reaktion kann man Lösungsmittel (falls vorhanden) und überschüssiges Phenol abtrennen, vorzugsweise durch Destillation, gegebenenfalls bei vermindertem Druck. Das hierbei gewonnene Destillat kann für weitere Umsetzungen wiederverwendet werden.

Beispielsweise können erfindungsgemäß auch die aus der US-PS 3 644 537 bekannten Phenolharze verwendet werden, die jedoch Produkte mit schlechten Härten ergeben.

Die erfindungsgemäß zu verwendenden Phenolharze enthalten pro Mol aus Phenol A stammender Einheiten 0,2 bis 1, vorzugsweise 0,4 bis 0,8 Mol aus Komponente B stammende Einheiten.

Die erfindungsgemäß zu verwendenden Phenolharze besitzen im allgemeinen Erweichungspunkte (nach DIN 53 244) von 50 bis 200 °C, OH-Zahlen von 100 bis 550 und als Zahlenmittel $\overline{M}_n$ bestimmte Molekulargewichte von 250 bis 2.000 (dampfdruckosmometrisch in Methanol und in Aceton bestimmt, wobei der niedrigere Wert als der korrekte angesehen wird).

Die beschriebenen Phenolharze werden erfindungsgemäß als Verstärkerharze für Kautschukvulkanisate verwendet. Diesen Vulkanisaten können Natur- und Synthesekautschuke zugrundeliegen.

Bevorzugte Synthesekautschuke sind beispielsweise bei W.Hofmann, Kautschuk-Technologie, Gentner Verlag, Stuttgart 1980, beschrieben. Sie umfassen u.a.

BR - Polybutadien

ABR - Butadien/Acrylsäure-$C_1$-$C_4$-alkylester-Copolymerisate mit Acrylester-Gehalten von 5 bis 60, vorzugsweise von 15 bis 50 Gew.-%

CR - Polychloropren

IR - Polyisopren

IIR - Isobutylen/Isopren-Copolymerisate

SBR - Styrol/Butadien-Copolymerisate mit Styrolgehalten von 1 bis 60, vorzugsweise von 20 bis 50 Gew.-%

NBR - Butadien/Acrylnitril-Copolymerisate mit Acrylnitrilgehalten von 5 bis 60, vorzugsweise 10 bis 50 Gew.-%

EPDM - Ethylen/Propylen/Dien-Copolymerisate

und Mischungen dieser Kautschuke.

Da sich die erfindungsgemäß zu verwendenden Phenolharze besonders als Verstärkerharze eignen, die bei der Reifenherstellung eingesetzt werden können, sind Naturkautschuk und Styrol/Butadien-Copolymerisate sowie deren Mischungen besonders bevorzugte Kautschuke.

Kautschuke besitzen Glasübergangstemperaturen unter 20 °C, vorzugsweise unter 0 °C, bestimmt im Torsionsschwingungsversuch nach DIN 53 445. Die Dosierung der Phenolharze kann 1 bis 50, vorzugsweise 3 bis 15, Gew.-%, bezogen auf Kautschuk, betragen.

Da die erfindungsgemäß zu verwendenden Phenolharze nicht selbsthärtend sind, bedarf es zu ihrer Härtung - wie bei den Novolaken - eines Zusatzes von Formaldehyd, Formaldehyd abspaltenden Verbindungen wie Hexamethylentetramin oder Methylolgruppen enthaltenden Melamin- oder Harnstoffkondensaten, wobei diese Härter in der Regel in Mengen von 2,5 bis 50, vorzugsweise 5 bis 15 Gew.-%, bezogen auf Phenolharz, eingesetzt werden. Werden die Phenolharze gehärtet und der sie umgebende Kautschuk vulkanisiert, so ist anzunehmen, daß vernetzte Systeme im Sinne von sog. Interpenetrating Networks entstehen. Dabei ist dann davon auszugehen, daß das erfindungsgemäß zu verwendende Phenolharz nicht Teil des für den Kautschuk notwendigen Vulkanisiersystems ist.

Die Vulkanisation kann in Gegenwart üblicher Vulkanisiermittel erfolgen; Beispiele hierfür umfassen elementaren Schwefel, Schwefelspender, Ethylenthioharnstoff, cyclische Thiuramdisufide, Peroxide, Vernetzerharze, Chinonderivate, Diisocyanate, Dithioniten, bifunktionelle Bunte-Salze, Diazoverbindungen, Dinitrosoverbindungen, Nitrene, Dithiole, Bisnitrilimine, Bishydrosilane.

Neben den Vulkanisiermitteln verwendet man gewöhnlich Vulkanisationsbeschleuniger, wie z. B. Thiuramderivate, Guanidin-, Mercapto- und Sulfenamidbeschleuniger (Thiazolderivate), daneben Aktivatoren wie Zinkoxid, Magnesiumoxid, Calciumoxid sowie Fettsäuren, wie z.B. Stearinsäure.

Füllstoffe können in üblicher Weise mitverwendet werden. Der bevorzugteste Füllstoff ist Ruß. Weichmacher, wie z. B. Mineralöl, können ebenfalls eingesetzt werden. Art und Menge der Füllstoffe und Weichmacher werden so gewählt, daß die Härte der Vulkanisate sowie die sonstigen gewünschten Eigenschaften, wie z. B. Abrieb, Rutschfestigkeit und Hysterese, den Praxisanforderungen genügen.

Stabilisatoren gegen thermischen und oxidativen Angriff können die Vulkanisate gegen Alterung schützen. Bevorzugte Stabilisatoren sind sterisch gehinderte Phenolderivate und Derivate des Phenylendiamins sowie Kondensationsprodukte von Anilinen und Ketonen.

Die erfindungsgemäße Verwendung führt zur Verbesserung einiger wichtiger mechanischer Eigenschaften der Vulkanisate, wie z.B. der Härte und der Spannungswerte. Die Einarbeitung der Verstärkerharze kann mittels der für die Herstellung von Kautschukmischungen üblichen Einrichtungen, z.B. mit Innenmischern und Walzwerken erfolgen. Bei hohen Mischungstemperaturen (Innenmischer) sollten zur Erzielung einer möglichst hohen Vulkanisathärte Verstärkerharz und Härter zur Vermeidung von vorzeitigen Reaktionen getrennt eingearbeitet werden. Hierbei ist es angezeigt, den Härter erst gegen Ende der Mischungsherstellung bei möglichst niedriger Mischungstemperatur (max. ca. 100 °C) einzumischen.

Die Vulkanisation kann bei Temperaturen von 100 bis 200 °C, vorzugsweise 130 bis 180 °C, gegebenenfalls unter einem Druck von 10 bis 200 bar, erfolgen.

Die Prozentangaben der nachfolgenden Beispiele beziehen sich jeweils auf das Gewicht; Teile sind Gewichtsteile.

Beispiele

Als "Produktgemisch" wurde im Beispiel 1 eine Mischung von den bei der Butadienchlorierung anfallenden Nebenprodukten mit einem Chlorgehalt von 54 % und einem C = C-Doppelbindungsgehalt von 0,575 Mol Doppelbindungen pro 100 g Produkt eingesetzt. Das Produktgemisch bestand zu 35 % aus Tetrachlorbutan, 40 % Dichloroctadienen, 7 % Trichlorbutenen, 8 % Tetrachloroctenen und 10 % anderen Produkten in geringeren Anteilen.

Beispiel 1

Zu einer Schmelze von 400 g Phenol und 4 g wasserfreiem Eisenchlorid wurden bei 60 °C 200 g Produktgemisch zugetropft, wobei sich die Reaktionsmischung auf ca. 80 °C erwärmte. Anschließend wurde noch 6 Stunden auf 182 °C erwärmt und das überschüssige Phenol abdestilliert. Als Rückstand verblieben 250 g Phenolharz vom Erweichungspunkt 105 °C; OH-Zahl: 240.

Beispiel 2

Zu einer Schmelze von 200 g Phenol und 4 g wasserfreiem Zinkchlorid wurden bei 60 °C 200 g eines Isomerengemisches (Chlorgehalt: 39,7 %; Doppelbindungsgehalt: 1,10 Mol pro 100 g) von Dichloroctadienen, das aus den Nebenprodukten ("Produktgemisch") der Butadienchlorierung herausdestilliert wurde (enthielt ca. 90 % Dichloroctadiene), zugetropft, wobei sich die Reaktionsmischung auf ca. 90 °C erwärmte. Anschließend wurde noch 4 Stunden auf 182 °C erwärmt und das überschüssige Phenol abdestilliert. Als Rückstand verblieben 204 g Phenolharz vom Erweichungspunkt 90 °C; OH-Zahl: 224.

Beispiel 3

Zu einer Schmelze von 400 g Phenol und 4 g wasserfreiem Eisenchlorid wurden bei 60 °C 200 g eines Isomerengemisches von 1,2,3,4-Tetrachorbutan (enthielt ca. 50 % meso- und ca. 50 % d,l-Tetrachlorbutan),

4

zugetropft. Anschließend wurde noch 6 Stunden auf 182°C erwärmt und das überschüssige Phenol abdestilliert. Als Rückstand verblieben 255 g Phenolharz vom Erweichungspunkt 96°C; OH-Zahl: 295.

Anwendung

Die folgenden Versuche dienen zur Erläuterung des Einsatzes der erfindungsgemäß zu verwendenden Phenolharze als Verstärkerharze für Kautschukmassen bzw. deren Vulkanisate.

Hierfür wurde folgende Prüfmischung verwendet, die zweistufig hergestellt wurde. Der erste Teil der Mischungsherstellung wurde in einem Innenmischer (Kneter) durchgeführt. Hierbei wurden folgende Bestandteile gemischt (in Teilen):

```
Naturkautschuk (Typ SMR 5)               75,0

Polybutadien                             25,0

Stearinsäure                              2,0

Zinkoxid                                  5,0

Verstärkerharz (vgl. Tabelle)             7,5

Ruß N 326                                70,0

N-Isoproyl-N'-phenyl-p-phenylen-
diamin (IPPD)                             1,5

2,2,4-Trimethyl-1,2-dihydrochinolin,
polymerisiert (TMQ)                       1,0
                                         ─────
                                        187,0
```

Nach einer Mischzeit von 5 Minuten wurde der Innenkneter entleert und die Teilmischung auf einem nachgeschalteten

```
Walzwerk nach folgender Rezeptur fertiggemischt (in
Teilen):

Teilmischung                            187,0

Schwefel                                  2,5

Benzothiazyl-2-sulfenmorpholid            1,5

N-Cyclohexyl-thiophthalimid               0,3

Hexamethylentetramin                      0,76
```

Die Vulkanisation der fertigen Mischungen erfolgte während 30 Minuten bei 150°C.

In der folgenden Tabelle werden die Ergebnisse der Vulkanisatprüfung aufgeführt. Die Ergebnisse der Vulkanisatprüfungen lassen erkennen, daß die erfindungsgemäß zu verwendenden Harze eine ausgezeichnete verstärkende Wirkung aufweisen.

Vulkanisate, verstärkt mit verschiedenen Harzen

| Prüfungen | Vergleich 1 Verstärkerharz-freies Vulkanisat | Vergleich 2 handelsüblicher Novolak* | Harz aus Beispiel 1 | 2 | 3 |
|---|---|---|---|---|---|
| Reißfestigkeit (MPa) | 19,4 | 16,2 | 16,5 | 16,2 | 14,6 |
| Bruchdehnung (%) | 332 | 300 | 370 | 366 | 347 |
| Spannungswert bei 100 % Dehnung (MPa) | 4,4 | 5,7 | 5,2 | 5,3 | 4,8 |
| Härte (Shore A) bei 23° C | 77 | 90 | 90 | 91 | 90 |
| bei 70° C | 72 | 87 | 87 | 89 | 86 |
| Rückprallelastizität (%) bestimmt bei 23° | 43 | 40 | 40 | 38 | 39 |
| 70° C | 53 | 46 | 43 | 42 | 44 |

*) Phenol/Formaldehyd-Kondensat, ®Vulkadur RB der Bayer AG

## Patentansprüche

1. Verwendung von Phenolharzen, erhältlich durch Friedel-Crafts-Alkylierung von A) mindestens einem Phenol und B) mindestens einer Verbindung mit 4 bis 8 C-Atomen und 2 bis 4 funktionellen Gruppen aus der Reihe Chloratome und C = C-Doppelbindungen als Verstärkerharz für Kautschukvulkanisate.

2. Verwendung nach Anspruch 1 in Mengen von 1 bis 50 Gew.-% Phenolharz, bezogen auf Kautschuk.

3. Verwendung nach Anspruch 1 in Mengen von 3 bis 15 Gew.-% Phenolharz, bezogen auf Kautschuk.

4. Verwendung nach Anspruch 1 bei der Herstellung von Reifenwulsten.

**Europäisches Patentamt**

**EUROPÄISCHER RECHERCHENBERICHT**

Nummer der Anmeldung

**EP 90 12 4290**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 248 309  (M.M.M.)<br>* Anspruch 1; Seite 7, Zeilen 27-28 *<br>— — — | 1-3 | C 08 L 21/00<br>C 08 G 61/02<br>B 60 C 15/00 //<br>(C 08 L 21/00<br>C 08 L 65:00 ) |
| X | DE-C-9 452 91  (CHEMISCHE WERKE ALBERT)<br>* Anspruch 1; Seite 3, Zeile 3 *<br>— — — | 1-3 | |
| X | DE-B-1 228 421  (B.F. GOODRICH)<br>* Anspruch 1; Spalte 3, Zeilen 55-59; Spalte 5; Zeilen 41-45 *<br>— — — | 1-3 | |
| X | US-A-3 625 874  (K.S. COTTMAN et al.)<br>* Anspruch 1; Spalte 5, Zeilen 58-64 *<br>— — — | 1-3 | |
| A | EP-A-0 023 256  (SUMITOMO RUBBER)<br>* Anspruch 8 *<br>— — — | 4 | |
| A,D | US-A-3 644 537  (B.F. DANNELS et al.)<br>* Anspruch 1 *<br>— — — — — | 1 | |

| | RECHERCHIERTE SACHGEBIETE (Int. Cl.5) |
|---|---|
| | C 08 L<br>C 08 G |

Der vorliegende Recherchenbericht wurde für alle Patentansprüche erstellt

| Recherchenort | Abschlußdatum der Recherche | Prüfer |
|---|---|---|
| Den Haag | 31 Mai 91 | VAN HUMBEECK F.W.C. |